# EUROPÄISCHE PATENTSCHRIFT

(11) **EP 3 110 664 B1**
(45) Veröffentlichungstag und Bekanntmachung des Hinweises auf die Patenterteilung: **18.12.2019**
(21) Anmeldenummer: 15705995.7
(22) Anmeldetag: 19.02.2015
(51) Int. Cl.: B60R 9/04

(54) **BEFESTIGUNGSANORDNUNG FÜR EIN DACHANBAUTEIL EINES KRAFTFAHRZEUGS**
FASTENING ASSEMBLY FOR A ROOF ADD-ON PART OF A MOTOR VEHICLE
ENSEMBLE DE FIXATION D'UN COMPOSANT DE TOIT D'UN VÉHICULE

(30) Priorität: 27.02.2014 DE 102014203558
(43) Veröffentlichungstag der Anmeldung: 04.01.2017
(73) Patentinhaber: Bayerische Motoren Werke Aktiengesellschaft, 80809 München (DE)
(72) Erfinder: KERSCHER, Martin, 84164 Dornwang (DE)
(86) Internationale Anmeldenummer: PCT/EP2015/053535
(87) Internationale Veröffentlichungsnummer: WO 2015/128243

(56) Entgegenhaltungen:
- EP-A2- 1 304 489
- DE-A1- 10 349 704
- DE-A1-102004 026 773
- DE-A1-102006 007 707

## Beschreibung

Die vorliegende Erfindung bezieht sich auf eine Befestigungsanordnung für ein Dachanbauteil eines Kraftfahrzeugs, wobei die Befestigungsanordnung ein Dachaußenhautelement, einen äußeren Dachseitenrahmen und ein Dachanbauteilbefestigungselement mit einem Gewinde zur lösbaren Befestigung des Dachanbauteils aufweist.

Aus der DE 102004026773 A1 ist beispielsweise eine Befestigungseinrichtung für einen Dachträger eines Kraftfahrzeugs bekannt. Hierbei ist die Befestigungseinrichtung am Boden einer Dachrinne ausgebildet, die durch ein äußereres Dachrahmenkarosserieblech und ein Fahrzeugdach gebildet ist. Eine Stützplatte weist einen Vorsprung mit einem Innengewinde auf, an dem der Dachträger oder dergleichen befestigt werden kann. Die Stützplatte ist wiederum über mehrere Blindniete mit dem Boden der Dachrinne verbunden. Insbesondere durchdringt der jeweilige Blindniet einen Flansch des Fahrzeugdaches, sowie die Flansche von drei Karosserieblechen des Dachseitenrahmens.

Befestigungsöffnungen zur Befestigung der Stützplatte an dem Boden der Dachrinne sind nachträglich in der Dachrinne ausgebildet. Zur Befestigung der Stützplatte wird dabei die Stützplatte mit zu den Befestigungsöffnungen fluchtenden Durchtrittsöffnungen positioniert, der Blindniet in die jeweilige Befestigungsöffnung eingebracht und die Stützplatte hierdurch an dem Fahrzeugdach die Flansche der Karosseriebleche miteinander klemmend fixiert. Eine weitere Befestigungsanordnung für die Befestigung eines Dachträgers an einer Dachrinne ist in der DE 10349704 offenbart.

Es ist die Aufgabe der vorliegenden Erfindung eine Befestigungsanordnung für ein Dachanbauteil eines Kraftfahrzeugs mit einem Dachaußenhautelement, einem äußeren Dachseitenrahmen und einem Dachanbauteilbefestigungselement mit einem Gewinde zum lösbaren Befestigen des Dachanbauteils zu schaffen, wobei eine Fertigung der Befestigungsanordnung vereinfacht ist.

Diese Aufgabe wird durch eine Befestigungsanordnung für ein Dachanbauteil eines Kraftfahrzeugs gelöst, die die Merkmale von Patentanspruch 1 aufweist. Bevorzugte Weiterbildungen sind in den abhängigen Patentansprüchen aufgeführt.

Eine Befestigungsanordnung für ein Dachanbauteil eines Kraftfahrzeugs gemäß der vorliegenden Erfindung hat ein Dachaußenhautelement, einen äußeren Dachseitenrahmen und ein Dachanbauteilbefestigungselement, das ein Gewinde zum lösbaren Befestigen des Dachanbauteils aufweist. Das Dachanbauteilbefestigungselement ist an einer Stützplatte befestigt. Die Stützplatte ist an einem Flansch des äußeren Dachseitenrahmens angeordnet und ist mittels eines Blindniets nur an dem Flansch des äußeren Dachseitenrahmens - die Stützplatte und den Flansch des äußeren Dachseitenrahmens insbesondere miteinander verklemmend - fixiert.

Hierdurch ist das Dachanbauteilbefestigungselement nur mit dem Flansch des äußeren Seitenrahmens verbunden. Insbesondere verbindet der Blindniet lediglich die Stützplatte mit dem Flansch des äußeren Dachseitenrahmens, so dass keine weitere fluchtende Durchgangsbohrung in anderen Karosserieelementen erforderlich ist. Hierdurch kann eine Durchgangsbohrung für den Blindniet bereits vor Montage des äußeren Dachseitenrahmens mit der Kraftfahrzeugkarosserie in den äußeren Dachseitenrahmen eingebracht werden und damit insbesondere bereits vor einem Lackprozess eingebracht werden, ohne Fertigungstoleranzen anderer Karosserieelemente und Fügetoleranzen dieser Karosserieelemente berücksichtigen zu müssen. Eine Position des Dachanbauteilbefestigungselements ist damit durch die Durchgangsbohrung bestimmt.

Die Stützplatte ist insbesondere lokal begrenzt ausgebildet, d.h. sie erstreckt sich lediglich über einen lokal begrenzten Teil des Flansches des äußeren Dachseitenrahmens. Dabei entspricht eine Breite der Stützplatte bevorzugt ungefähr einer Breite des Flansches des äußeren Dachseitenrahmens. Die Stützplatte kann auch etwas breiter oder etwas weniger breit als der Flansch des äußeren Dachseitenrahmens ausgebildet sein. Die Stützplatte kann sich in Längsrichtung des Flansches über einen Bereich erstrecken, die kürzer als ein einstelliges Vielfaches der Breite des Flansches ist.

Der Blindniet verbindet vorteilhaft die Stützplatte und den Flansch jene miteinander klemmend.

Das Dachanbauteil kann beispielsweise ein Dachträger zum Transportieren von Lasten und Gepäckstücken oder Sportgeräten sein. Insbesondere kann das Dachanbauteil ein herkömmlicher Dachträger für ein Personenkraftfahrzeug sein.

Es können zumindest zwei oder mehr Dachanbauteilbefestigungselemente mit jeweils einer zugehörigen Stützplatte an einem rechten äußeren Dachseitenrahmen und es können entsprechend zwei oder mehr Dachanbauteilbefestigungselemente mit jeweils einer zugehörigen Stützplatte an einem linken äußeren Dachseitenrahmen vorgesehen sein. Bevorzugt sind damit vier Befestigungsanordnungen für das Dachanbauteil vorgesehen, so dass das Dachanbauteil an zumindest vier voneinander beabstandeten Punkten mit dem Kraftfahrzeug verbindbar ist.

Der äußere Dachseitenrahmen und das Dachaußenhautelement bilden bevorzugt an Ihrer Schnittstelle eine sich in Fahrzeuglängsrichtung erstreckende Vertiefung aus, die auch Regenrinne genannt wird.

Gemäß einer bevorzugten Weiterbildung ist das Dachanbauteilbefestigungselement durch den Blindniet ausgebildet. Hierdurch bildet der Blindniet sowohl eine Befestigungseinrichtung der Stützplatte an dem äußeren Dachseitenrahmen als auch ein Befestigungselement für das Dachanbauteil.

Gemäß einer weiteren bevorzugten Weiterbildung weist der Flansch des äußeren Dachseitenrahmens eine Flanschdurchgangsbohrung auf und die Stützplatte weist eine Stützplattendurchgangsbohrung auf, wobei die Flanschdurchgangsbohrung und die Stützplattendurchgangsbohrung miteinander fluchtend und zur Durchführung des Blindniets ausgebildet sind.

Da die Stützplatte ein lokal begrenztes Element ist, unabhängig von Fahrzeugkarosserieelementen ausgebildet ist und lediglich eine stützende Funktion hat, kann die Stützplattendurchgangsbohrung besonders leicht fluchtend mit der Flanschdurchgangsbohrung angeordnet werden. Es ist keine nachträgliche Bohrung zur Verwirklichung von fluchtenden Durchgangsbohrungen mit engen Toleranzen notwendig und der Blindniet kann leicht durch die Flanschdurchgangsbohrung und die Stützplattendurchgangsbohrung durchgeführt werden, so dass er den Flansch des äußeren Dachseitenrahmens und die Stützplatte leicht klemmend miteinander verbinden kann.

Gemäß einer bevorzugten Weiterbildung ist die Stützplatte an einer Innenseite des Flansches des äußeren Dachseitenrahmens angeordnet. Insbesondere ist die Innenseite des Flansches des Dachseitenrahmens eine Seite, die entgegengesetzt zu einer Karosserieaußenseite ist.

Hierdurch ist die Stützplatte von außen nicht oder kaum sichtbar.

Vorteilhaft weist das Dachaußenhautelement der Befestigungsanordnung gemäß der vorliegenden Erfindung einen Dachflansch auf. Der Dachflansch ist mit dem Flansch des äußeren Dachseitenrahmens verbunden. Ferner weist der Dachflansch im Bereich des Blindniets vorteilhaft einen Ausschnitt auf, der hinreichend größer als ein Kopf des Blindniets ist.

Hierdurch ist das Dachaußenhautelement auf herkömmliche Weise mit dem äußeren Dachseitenrahmen verbunden, wohingegen das Dachaußenhautelement durch den Ausschnitt in dem Dachflansch nicht mit dem Blindniet überlappt. Hierdurch bildet der Blindniet keine form- und kraftschlüssige Verbindung des Dachaußenhautelements mit dem äußeren Dachseitenrahmen.

Der Ausschnitt kann hinreichend groß ausgebildet sein, um Fertigungstoleranzen des Dachaußenhautelements auszugleichen, wobei das Dachaußenhautelement nicht mit dem Blindniet überlappt.

Gemäß einer bevorzugten Weiterbildung ist das Dachaußenhautelement aus einem anderen Werkstoff als der Dachseitenrahmen gefertigt. Insbesondere hat der Werkstoff des Dachaußenhautelements einen anderen Wärmeausdehnungskoeffizienten als der Werkstoff des äußeren Dachseitenrahmens. Z.B. kann das Dachaußenhautelement aus einem Leichtmetallwerkstoff, insbesondere einem Aluminiumwerkstoff, oder einem Faserkunststoffverbundwerkstoff ausgebildet sein. Der äußere Dachseitenrahmen kann aus einem Stahlwerkstoff ausgebildet sein.

Unterschiedliche Werkstoffe mit unterschiedlichen Wärmeausdehnungskoeffizienten führen normalerweise zu Problemen an Verbindungsstellen, wobei durch die vorliegende Erfindung zumindest über das Dachanbauteilbefestigungselement vorteilhaft keine Verbindung der Elemente mit den unterschiedlichen Werkstoffen und unterschiedlichen Wärmeausdehnungskoeffizienten erfolgt. Durch hinreichend große Wahl des Ausschnitts des Dachflansches im Bereich des Blindniets kann eine Überlappung des Dachflansches mit dem Blindniet in einem großen Temperaturbereich, dem Kraftfahrzeuge ausgesetzt sein können, vermieden werden.

Bevorzugt ist der Dachflansch mit dem Flansch des äußeren Dachseitenrahmens verklebt. Hierdurch ist das Dachaußenhautelement an den Dachseitenrahmen geklebt.

Gemäß einer bevorzugten Weiterbildung der Befestigungsanordnung bildet der äußere Dachseitenrahmen zusammen mit einem inneren Dachseitenrahmen ein Dachseitenrahmenhohlprofil. Dabei ist ein Flansch des inneren Dachseitenrahmens mit dem Flansch des äußeren Dachseitenrahmens verbunden. Der Flansch des inneren Dachseitenrahmens weist dabei bevorzugt einen Ausschnitt im Bereich des Blindniets auf, der zumindest größer als eine Blindnietwulst ist.

Hierdurch ist der Flansch des äußeren Dachseitenrahmens zwar mit dem Flansch des inneren Dachseitenrahmens grundsätzlich verbunden, der Blindniet verbindet jedoch nur die Stützplatte und den Flansch des äußeren Dachseitenrahmens. Damit bei einer Montage des Blindniets der Blindniet, insbesondere der Kopf des Blindniets, nicht mit dem Flansch des inneren Dachseitenrahmens überlappt, hat der Flansch des inneren Dachseitenrahmens den Ausschnitt im Bereich des Blindniets.

Gemäß einer weiteren vorteilhaften Weiterbildung der Befestigungsanordnung gemäß der vorliegenden Erfindung ist die Stützplatte zwischen dem Flansch des äußeren Dachseitenrahmens und dem Flansch des inneren Dachseitenrahmens angeordnet.

Damit kann die Stützplatte zwischen dem Flansch des äußeren Dachseitenrahmens und dem Flansch des inneren Dachseitenrahmens fixiert sein.

Die Befestigungsanordnung mit dem äußeren Dachseitenrahmen und dem inneren Dachseitenrahmen kann ferner eine Dachseitenrahmenverstärkung aufweisen, die zwischen dem äußeren Dachseitenrahmen und dem inneren Dachseitenrahmen angeordnet ist. Ein Flansch der Dachseitenrahmenverstärkung ist dabei zwischen dem Flansch des äußeren Dachseitenrahmens und dem Flansch des inneren Dachseitenrahmens angeordnet und mit dem Flansch des äußeren Dachseitenrahmens und dem Flansch des inneren Dachseitenrahmens verbunden. Die Stützplatte ist zwischen dem Flansch des äußeren Dachseitenrahmens und dem Flansch der Dachseitenrahmenverstärkung angeordnet und der Flansch der Dachseitenrahmenverstärkung kann einen Ausschnitt aufweisen, der zumindest hinreichend größer als der Blindniet bzw. eine Blindnietwulst ausgebildet ist.

Hierdurch überlappt auch der Flansch der Dachseitenrahmenverstärkung nicht mit der Blindnietwulst bzw. der Blindnietverbindung.

Gemäß einer bevorzugten Weiterbildung ist die Stützplatte zusätzlich stoffschlüssig, z.B. durch Kleben oder Schweißen mit dem Flansch des äußeren Dachseitenrahmens verbunden. Ferner kann die Stützplatte zusätzlich mit dem Flansch des inneren Dachseitenrahmens bzw. dem Flansch der Dachseitenrahmenverstärkung, falls diese vorhanden ist, stoffschlüssig, z.B. durch Kleben oder Schweißen, verbunden sein.

Hierdurch ist die Befestigungsanordnung insgesamt sehr stabil.

Gemäß einer besonders bevorzugten Weiterbildung ist der Blindniet als Blindnietmutter ausgebildet.

Dadurch ist eine besonders einfache Montage mit wenigen Bauteilen möglich, wobei ein Innengewinde der Blindnietmutter gleichzeitig das Gewinde zur Anbindung des Dachanbauteils mittels eines Schraubenelements sein kann.

Vorstehend erläuterte Merkmale und Weiterbildungen der Erfindung können soweit möglich und sinnvoll beliebig miteinander kombiniert werden.

Es folgt eine Kurzbeschreibung der Figuren.
- Fig. 1: ist eine schematische Schnittansicht entlang einer Fahrzeugquerrichtung und einer Fahrzeughochrichtung einer Befestigungsanordnung für ein Dachanbauteil eines Kraftfahrzeugs gemäß einem Ausführungsbeispiel der vorliegenden Erfindung.
- Fig. 2: ist eine weitere schematische Schnittansicht entlang der Fahrzeugquerrichtung und der Fahrzeughochrichtung der Befestigungsanordnung für das Dachanbauteil des Kraftfahrzeugs gemäß dem Ausführungsbeispiel der vorliegenden Erfindung.
- Fig. 3: ist eine schematische Schnittansicht entlang einer Fahrzeuglängsrichtung und der Fahrzeughochrichtung der Befestigungsanordnung für das Dachanbauteil des Kraftfahrzeugs gemäß dem Ausführungsbeispiel der vorliegenden Erfindung.

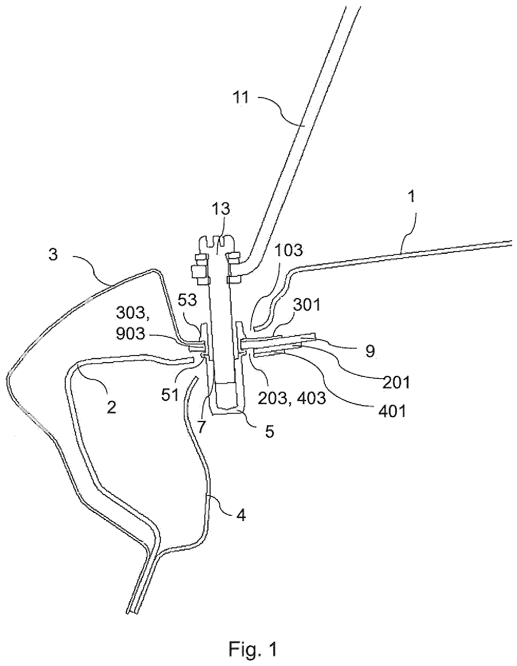

Nachstehend erfolgt eine detaillierte Beschreibung eines Ausführungsbeispiels der vorliegenden Erfindung unter Bezugnahme auf Figuren 1 bis 3.

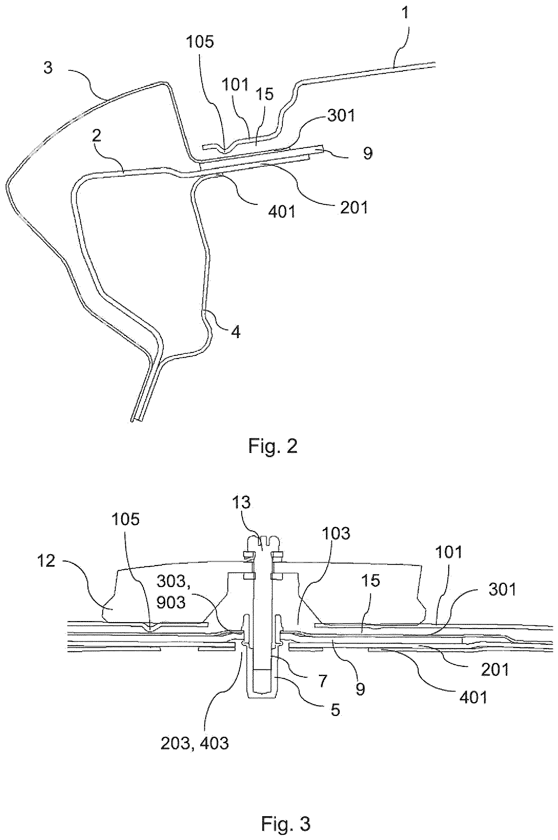

Wie in der schematischen Schnittansicht von Figur 1 gezeigt ist, hat eine Befestigungsanordnung für ein Dachanbauteil 11, das beispielsweise ein Dachträger sein kann, eines Kraftfahrzeugs gemäß der vorliegenden Erfindung einen Dachseitenrahmen bestehend aus einem äußeren Dachseitenrahmen 3, einem inneren Dachseitenrahmen 4 und einer dazwischen angeordneten Dachseitenrahmenverstärkung 2. Der Dachseitenrahmen 2, 3, 4 bildet ein Hohlprofil. Der Dachseitenrahmen ist ein Dachseitenrahmen eines herkömmlichen Personenkraftfahrzeugs mit einem festen Dach. Das Personenkraftfahrzeug kann dabei als Limousine oder als ein Fahrzeug mit einem Steilheck oder einem Schrägheck ausgebildet sein. Das Kraftfahrzeug hat einen linken und einen rechten Dachseitenrahmen, zwischen denen ein plattenförmiges Dachaußenhautelement 1 angeordnet ist. Der äußere Dachseitenrahmen 3, der innere Dachseitenrahmen 4 und die dazwischen angeordnete Dachseitenrahmenverstärkung 2 sind an zugehörigen Flanschen 301, 401 und 201 miteinander verbunden. Ferner ist das Dachaußenhautelement 1 über einen Dachflansch 101, der in Figur 2 gezeigt ist, mit dem Flansch 301 des äußeren Dachseitenrahmens 3 verbunden. Insbesondere ist in einem Spalt 15 zwischen dem Flansch 301 des äußeren Dachseitenrahmens 3 und dem Dachflansch 101 des Dachaußenhautelements 1 eine Klebemittelschicht ausgebildet, so dass das Dachaußenhautelement 1 mit dem äußeren Dachseitenrahmen 3 verklebt ist. Im Bereich des Flansches 301 des äußeren Dachseitenrahmens 3 und des Dachflansches 101, mit anderen Worten in einem Bereich, in dem der Dachseitenrahmen 1 und das Dachaußenhautelement 1 aneinandergrenzen, ist eine Regenrinne des Kraftfahrzeugs ausgebildet, die sich im Wesentlichen in Längsrichtung, d.h. in X-Richtung, des Kraftfahrzeugs erstreckt.

Das Dachanbauteil 11 hat einen Fuß 12, der in Figur 3 gezeigt ist. Der Fuß 12 des Dachanbauteils 11 stützt sich an der Regenrinne des Kraftfahrzeugs, insbesondere an dem Dachflansch 101, ab.

In den Figuren ist lediglich schematisch der linke Dachseitenrahmen des Kraftfahrzeugs gezeigt. Der rechte Dachseitenrahmen ist analog aufgebaut und ist zur Vermeidung von Wiederholungen hier nicht weiter beschrieben.

Ferner ist in Figur 1 ein als Blindnietmutter ausgebildetes Dachanbauteilbefestigungselement 5 gezeigt, das in der Regenrinne des Kraftfahrzeugs angeordnet ist. Die Blindnietmutter 5 hat ein Innengewinde 7 in das eine Schraube 13 zum Befestigen des Dachanbauteils 11 eingeschraubt ist bzw. einschraubbar ist. Die Blindnietmutter 5 ist von oben durch eine entsprechende zuvor ausgebildete Durchgangsbohrung 303 in den Flansch 301 des äußeren Dachseitenrahmens 3 eingeführt und durchdringt ferner eine mit der Durchgangsbohrung 301 fluchtende Durchgangsbohrung 903 einer Stützplatte 9, die unterhalb des Flansches 301 des äußeren Dachseitenrahmens 3 an diesem angrenzend angeordnet ist. Die Blindnietmutter 5 ist ausschließlich an diesen zwei Elementen, d.h. dem Flansch 301 und der Stützplatte 9, angebracht und verbindet diese zwei Elemente klemmend. Ein Wulst 51 der Blindnietmutter 5 greift mit einer Unterseite der Stützplatte 9 ein. Ein Kragen 53 der Blindnietmutter 5 greift mit der Oberseite des Flansches 301 ein. Der Wulst 51 der Blindnietmutter 5 wird bei einem Montieren der Blindnietmutter 5 von oben durch Verformung ausgebildet. Die Stützplatte 9 gibt dabei dem verhältnismäßig dünnen Flansch 301 des äußeren Dachseitenrahmens 3 Stabilität für eine hinreichend feste und stabile Anbindung der Blindnietmutter 5 als Dachanbauteilbefestigungselement. Im Bereich der Blindnietmutter 5 weist das Dachaußenhautelement 1 einen hinreichend großen Ausschnitt 103 auf, so dass das Dachaußenhautelement 1 nicht mit der Blindnietmutter 5, insbesondere dem Kragen 53 der Blindnietmutter 5 überlappt. Der Ausschnitt 103 des Dachflansches 101 ist groß genug gewählt, so dass das Dachaußenhautelement 1 und der Dachseitenrahmen 3 keinen engen Fertigungstoleranzen bzw. Fügetoleranzen zueinander unterliegen.

Auf der Unterseite der Blindnietmutter 5 weist der Flansch 201 der Dachseitenrahmenverstärkung 2 einen Ausschnitt 203 auf, der hinreichend groß gewählt ist, so dass er nicht mit dem Wulst 51 der Blindnietmutter 5 an der Unterseite der Stützplatte 9 überlappt. Ebenso weist der Flansch 401 des inneren Dachseitenrahmens 4 einen hinreichend großen Ausschnitt 403 auf, so dass dieser ebenfalls nicht mit dem Wulst 51 der Blindnietmutter 5 überlappt. Die Ausschnitte 203 und 403 unterliegen dabei keinen engen Toleranzen und können hinreichend größer als der Wulst 51 der Blindnietmutter 5 ausgebildet sein. Damit können die Ausschnitte 203 und 403 einfach in den Karosserierohbauteilen Dachseitenrahmenverstärkung 2 und innerer Dachseitenrahmen 4 ausgebildet werden, bevor diese Karosserierohbauteile aneinandergefügt werden und einen Lackierprozess durchlaufen.

Ebenso kann der Ausschnitt 103 des Dachflansches 101 vor einer Montage des Dachaußenhautelements 1 und gegebenenfalls vor einem Lackierprozess des Dachaußenhautelements 1 einfach ausgebildet werden.

Ebenso kann die Durchgangsöffnung 303 des Flansches 301 des äußeren Dachseitenrahmens 3 bereits zuvor, also vor Montage des äußeren Dachseitenrahmens 3 einfach ausgebildet werden, da die Lage der Durchgangsbohrung 303 von keinem anderen Karosseriebauteil, wie dem Dachaußenhautelement 1, der Dachseitenrahmenverstärkung 2 und dem inneren Dachseitenrahmen 4, abhängt und die Lage des Dachanbauteilbefestigungselements in Form der Blindnietmutter 5 lediglich in Bezug auf den äußeren Dachseitenrahmens 3 definiert bzw. bestimmt ist. Die Stützplatte 9, die ein in seiner Größe begrenztes Element ist, kann wiederum einfach mit der Durchgangsbohrung 303 fluchtend an dem Flansch 301 des äußeren Dachseitenrahmens 3 angeordnet werden.

Es ist also gemäß der vorliegenden Erfindung im Vergleich zu bisher bekannten Lösungen keine Anbindung eines Dachanbauteilbefestigungselements an dem Dachaußenhautelement bzw. der Dachseitenrahmenverstärkung bzw. dem inneren Dachseitenrahmen notwendig, so dass auch keine nachträgliche anzubringende Durchgangsbohrung erforderlich ist, um miteinander fluchtende Durchgangsbohrungen zu erzielen.

Während der in einer y-z Ebene verlaufende Schnitt von Figur 1 durch die Blindnietmutter 5 verläuft, ist der in Figur 2 gezeigte schematische Schnitt in einer y-z Ebene benachbart zu der Blindnietmutter 5 ausgebildet Wie Figur 2 zu entnehmen ist, liegt die Stützplatte 9 an der Unterseite des Flansches 301 des äußeren Dachseitenrahmens 3 an. An der Unterseite der Stützplatte 9 liegt wiederum der Flansch 201 der Dachseitenrahmenverstärkung 2 an. Ferner ist der Flansch 401 gezeigt, der an einer Unterseite des Flansches 201 der Dachseitenrahmenverstärkung 2 anliegt. Die Flansche 301, 201 und 401 sind dabei auf geeignete Art und Weise miteinander verbunden. Die Verbindung kann dabei stoffschlüssig, beispielsweise durch Schweißen oder Kleben, erfolgen. Es ist auch möglich, dass insbesondere die Stützplatte 9 mit den Flanschen 301 und 201 verklebt ist, während außerhalb der Stützplatte 9 die Flansche 301 und 201 miteinander verschweißt sind.

Ferner ist in Figur 2 gezeigt, dass der Dachflansch 101 einen Vorsprung 105 aufweist, der in Richtung zu dem Flansch 301 von dem Dachflansch 101 absteht und den Flansch 301 kontaktiert. Der Dachflansch 101 kann mehrere dieser Vorsprünge 105 aufweisen und dient dazu einen Abstand, also den Spalt 15, zwischen dem Dachflansch 101 und dem Flansch 301 sicher zu stellen, so dass das Klebemittel in dem Spalt 15 zwischen dem Dachflansch 101 und dem Flansch 301 unter Beanspruchung, insbesondere durch den Fuß 12 des Dachanbauteils 11, der auf dem Dachflansch 101 aufliegt und abgestützt ist, wie in Figur 3 gezeigt ist, nicht fließen kann, da die Vorsprünge 105 an dem Flansch 301 des äußeren Dachseitenrahmens 3 abgestützt sind.

Figur 3 zeigt schematisch einen Längsschnitt, d.h. ein Schnitt entlang einer x-z Richtung, durch die Blindnietmutter 5 und angrenzende Bereiche der Regenrinne. Wie in Figur 3 zu sehen ist, erstreckt sich die Stützplatte 9 dabei in Längsrichtung über einen lokal begrenzten Teil der Regenrinne. Wie ebenso aus Figur 3 ersichtlich ist, sind der Ausschnitt 103 des Flansches 101, der Ausschnitt 203 des Flansches 201 und der Ausschnitt 403 des Flansches 401 hinreichend groß gewählt, so dass sie unter Berücksichtigung aller Fertigungstoleranzen und Fügetoleranzen der Karosserierohbauteile 1, 2 und 4 nicht mit der Blindnietmutter 5 und dessen Wulst 51 überlappen.

Die Blindnietmutter 5 ist damit erfindungsgemäß ausschließlich an dem Flansch 301 des äußeren Dachseitenrahmens 3 und der Stützplatte 9 befestigt, wobei die Blindnietmutter 5 den Flansch 301 des äußeren Dachseitenrahmens 3 und die Stützplatte 9 miteinander klemmend verbindet. Hierfür weisen der Flansch 301 und die Stützplatte 9 entsprechende fluchtende Durchgangsbohrungen 303 und 309 auf. Ferner bildet die Blindnietmutter 5 sowohl eine Verbindung zwischen dem Flansch 301 und der Stützplatte 9 aus als auch ein Innengewinde zur Anbindung des Dachanbauteils 11.

## Patentansprüche

1. Befestigungsanordnung für ein Dachanbauteil eines Kraftfahrzeugs mit einem Dachaußenhautelement (1), einem äußeren Dachseitenrahmen (3) und einem Dachanbauteilbefestigungselement (5), das ein Gewinde (7) zum lösbaren Befestigen des Dachanbauteils aufweist, wobei das Dachanbauteilbefestigungselement (5) an einer Stützplatte (9) befestigt ist, die an einem Flansch (301) des äußeren Dachseitenrahmen (3) angeordnet ist, und die Stützplatte (9) mittels eines Blindniets (5) nur an dem Flansch (301) des äußeren Dachseitenrahmens (3) fixiert ist.

2. Befestigungsanordnung nach Patentanspruch 1, wobei das Dachanbauteilbefestigungselement durch den Blindniet (5) ausgebildet ist.

3. Befestigungsanordnung nach Patentanspruch 1 oder 2, wobei der Flansch (301) des äußeren Dachseitenrahmens (3) eine Flanschdurchgangsbohrung (303) aufweist und die Stützplatte (9) eine Stützplattendurchgangsbohrung (903) aufweist, wobei die Fianschdurchgangsbohrung (303) und die Stützplattendurchgangsbohrung (903) miteinander fluchten und zur Durchführung des Blindniets (5) ausgebildet sind.

4. Befestigungsanordnung nach einem der Patentansprüche 1 bis 3, wobei die Stützplatte (9) an einer Innenseite des Flansches (301) des äußeren Dachseitenrahmens (3) angeordnet ist.

5. Befestigungsanordnung nach einem der Patentansprüche 1 bis 4, wobei das Dachaußenhautelement (1) einen Dachflansch (101) aufweist, der mit dem Flansch (301) des äußeren Dachseitenrahmens (3) verbunden ist, wobei der Dachflansch (101) im Bereich des Blindniets (5) einen Ausschnitt (103) aufweist.

6. Befestigungsanordnung nach einem der Patentansprüche 1 bis 5, wobei das Dachaußenhautelement (1) aus einem anderen Werkstoff als der äußere Dachseitenrahmen (3) gefertigt ist, wobei der Werkstoff des Dachaußenhautelements (1) einen anderen Wärmeausdehnungskoeffizient als der Werkstoff des äußeren Dachseitenrahmens (3) aufweist, und wobei insbesondere das Dachaußenhautelement (1) aus einem Leichtmetallwerkstoff oder einem Faserverbundwerkstoff ausgebildet ist und der äußere Dachseitenrahmen (3) aus einem Stahlwerkstoff ausgebildet ist.

7. Befestigungsanordnung nach einem der Patentansprüche 1 bis 6, wobei der äußere Dachseitenrahmen (3) zusammen mit einem inneren Dachseitenrahmen (4) ein Dachseitenrahmenhohlprofil ausbildet, und wobei ein Flansch (401) des inneren Dachseitenrahmens (4) mit dem Flansch (301) des äußeren Dachseitenrahmens (3) verbunden ist, und wobei der Flansch (401) des inneren Dachseitenrahmens (4) einen Ausschnitt (403) im Bereich des Blindniets (5) aufweist, der zumindest größer als eine Blindnietwulst (51) ist.

8. Befestigungsanordnung nach Patentanspruch 7, wobei die Stützplatte (9) zwischen dem Flansch (301) des äußeren Dachseitenrahmens (3) und dem Flansch (401) des inneren Dachseitenrahmens (4) angeordnet ist.

9. Befestigungsanordnung nach Patentanspruch 7, wobei zwischen dem äußeren Dachseitenrahmen (3) und dem inneren Dachseitenrahmen (4) eine Dachseitenrahmenverstärkung (2) angeordnet ist, wobei ein Flansch (201) der Dachseitenrahmenverstärkung (2) zwischen dem Flansch (301) des äußeren Dachseitenrahmens (3) und dem Flansch (401) des inneren Dachseitenrahmen (4) angeordnet ist und mit dem Flansch (301) des äußeren Dachseitenrahmens (3) und dem Flansch (401) des inneren Dachseitenrahmens (4) verbunden ist, wobei die Stützplatte (9) zwischen dem Flansch (301) des äußeren Dachseitenrahmens (3) und dem Flansch (201) der Dachseitenrahmenverstärkung (2) angeordnet ist und wobei der Flansch (201) der Dachseitenrahmenverstärkung (2) einen Ausschnitt (203) aufweist, der zumindest größer als eine Blindnietwulst (51) ist.

10. Befestigungsanordnung nach einem der Patentansprüche 1 bis 9, wobei die Stützplatte (9) zusätzlich stoffschlüssig, insbesondere durch Kleben oder Schweißen, mit dem Flansch (301) des äußeren Dachseitenrahmens (3) verbunden ist.

11. Befestigungsanordnung nach einem der Patentansprüche 1 bis 10, wobei der Blindniet als Blindnietmutter ausgebildet ist.

## Claims

1. A fastening assembly for a roof add-on part of a motor vehicle, with a roof skin element (1), an outer roof side frame (3) and a roof-add-on-part fastening element (5), which has a thread (7) for detachably fastening the roof add-on part, wherein the roof-add-on-part fastening element (5) is fastened to a support plate (9), which is arranged on a flange (301) of the outer roof side frame (3) and the support plate (9) is fixed by means of a blind rivet (5) only to the flange (301) of the outer roof side frame (3).

2. A fastening assembly according to Claim 1, wherein the roof-add-on-part fastening element is formed by the blind rivet (5).

3. A fastening assembly according to Claim 1 or 2, wherein the flange (301) of the outer roof side frame (3) has a flange through bore (303) and the support plate (9) has a support plate through bore (903), the flange through bore (303) and the support plate through bore (903) being in line with one another and being designed in such a way that the blind rivet (5) can pass through.

4. A fastening assembly according to one of Claims 1 to 3, wherein the support plate (9) is positioned on an inner side of the flange (301) of the outer roof side frame (3).

5. A fastening assembly according to one of Claims 1 to 4, wherein the roof skin element (1) has a roof flange (101) which is attached to the flange (301) of the outer roof side frame (3), the roof flange (101) having a recess (103) in the area of the blind rivet (5).

6. A fastening assembly according to one of Claims 1 to 5, wherein the roof skin element (1) is made from a different material to the outer roof side frame (3), the material of the roof skin element (1) having a different thermal expansion coefficient to the material of the outer roof side frame (3), and the roof skin element (1) in particular being made out of a light metal material or a fibre composite and the outer roof side frame (3) being made out of steel material.

7. A fastening assembly according to one of Claims 1 to 6, wherein the outer roof side frame (3) together with an inner roof side frame (4) forms a roof side frame hollow profile, and wherein a flange (401) of the inner roof side frame (4) is connected with the flange (301) of the outer roof side frame (3), and wherein the flange (401) of the inner roof side frame (4) has a recess (403) in the region of the blind rivet (5) which is at least larger than a blind rivet bead (51).

8. A fastening assembly according to Claim 7, wherein the support plate (9) is positioned between the flange (301) of the outer roof side frame (3) and the flange (401) of the inner roof side frame (4).

9. A fastening assembly according to Claim 7, wherein a roof side frame reinforcement (2) is positioned between the outer roof side frame (3) and the inner roof side frame (4), a flange (201) of the roof side frame reinforcement (2) being positioned between the flange (301) of the outer roof side frame (3) and the flange (401) of the inner roof side frame (4) and connected to the flange (301) of the outer roof side frame (3) and the flange (401) of the inner roof side frame (4), wherein the support plate (9) is positioned between the flange (301) of the outer roof side frame (3) and the flange (201) of the roof side frame reinforcement (2) and wherein the flange (201) of the roof side frame reinforcement (2) has a recess (203) which is at least larger than a blind rivet bead (51).

10. A fastening assembly according to one of Claims 1 to 9, wherein the support plate (9) is also firmly bonded to the flange (301) of the outer roof side frame (3), in particular by means of gluing or welding.

11. A fastening assembly according to one of Claims 1 to 10, wherein the blind rivet is formed as a blind rivet nut.

## Revendications

1. Dispositif de fixation destiné à un composant de toit d'un véhicule comprenant un élément de peau de toit externe (1), un châssis latéral de toit externe (3) et un élément de fixation de composant de toit (5) qui comporte un filetage (7) permettant la fixation amovible du composant de toit, l'élément de fixation du composant de toit (5) étant fixé à une plaque d'appui (9) qui est installée sur une bride (301) du cadre latéral de toit externe (3), et, la plaque d'appui (9) n'étant fixée qu'à la bride (301) du cadre latéral de toit externe (3) au moyen d'un rivet borgne (5).

2. Dispositif de fixation conforme à la revendication 1,
dans lequel l'élément de fixation du composant de toit est formé par le rivet borgne (5).

3. Dispositif de fixation conforme à la revendication 1 ou 2,
dans lequel la bride (301) du cadre latéral de toit externe (3) comporte un perçage traversant (303) et la plaque d'appui (9) comporte un perçage traversant (903), le perçage traversant de la bride (303) et le perçage traversant de la plaque d'appui (903) étant alignés et pour permettre le passage de l'écrou borgne (5).

4. Dispositif de fixation conforme à l'une des revendications 1 à 3,
dans lequel la plaque d'appui (9) est installée sur le côté interne de la bride (301) du cadre latéral de toit externe (3).

5. Dispositif de fixation conforme à l'une des revendications 1 à 4,
dans lequel l'élément de peau de toit externe (1) comporte une bride de toit (101) qui est reliée à la bride (301) du cadre latéral de toit externe (3), la bride de toit (101) comprenant une découpe (103) dans la zone du rivet borgne (5).

6. Dispositif de fixation conforme à l'une des revendications 1 à 5,
dans lequel l'élément de peau de toit externe (1) est réalisé en un autre matériau que le cadre latéral de toit externe (3), et le matériau de 'élément de peau de toit externe (1) a un coefficient de dilatation thermique différent de celui du matériau du cadre latéral de toit externe (3), et, en particulier, l'élément de peau de toit externe (1) est réalisé en un métal léger ou en matériau composite renforcé par des fibres et le cadre latéral de toit externe (3) est réalisé en acier.

7. Dispositif de fixation conforme à l'une des revendications 1 à 6,
dans lequel le cadre latéral de toit externe (3) forme avec un cadre latéral de toit interne (4) un profilé creux de cadre latéral de toit, une bride (401) du cadre latéral de toit interne (4) est reliée à la bride (301) du cadre latéral de toit externe (3), et la bride (401) du cadre latéral de toit interne (4) comporte dans la zone du rivet borgne (5) une découpe (403) qui est au moins plus grande qu'un bourrelet du rivet borgne (51).

8. Dispositif de fixation conforme à la revendication 7,
dans lequel la plaque d'appui (9) est installée entre la bride (301) du cadre latéral de toit externe (3) et la bride (401) du cadre latéral de toit interne (4).

9. Dispositif de fixation conforme à la revendication 7,
dans lequel, entre le cadre latéral de toit externe (3) et le cadre latéral de toit interne (4) est installé un renfort de cadre latéral de toit (2), et une bride (201) du renfort de cadre latéral de toit (2) est installée entre la bride (301) du cadre latéral de toit externe (3) et la bride (401) du cadre latéral de toit interne (4) et est reliée à la bride (301) du cadre latéral de toit externe (3) et à la bride (401) du cadre latéral de toit interne (4), la plaque d'appui (9) étant installée entre la bride (301) du cadre latéral de toit externe (3) et la bride (201) du renfort de cadre latéral de toit (2) et la bride (201) du renfort de cadre latéral de toit (2) comportant une découpe (203) qui est au moins plus grande qu'un bourrelet du rivet borgne (51).

10. Dispositif de fixation conforme à l'une des revendications 1 à 9,
dans lequel la plaque d'appui (9) est en particulier reliée par une liaison par la matière, en particulier par collage ou soudage à la bride (301) du cadre latéral de toit externe (3).

11. Dispositif de fixation conforme à l'une des revendications 1 à 10,
dans lequel le rivet borgne est réalisé sous la forme d'un écrou de rivet borgne.
